# EUROPÄISCHE PATENTSCHRIFT

(11) **EP 3 083 120 B1**
(45) Veröffentlichungstag und Bekanntmachung des Hinweises auf die Patenterteilung: **21.08.2019**
(21) Anmeldenummer: 14796725.1
(22) Anmeldetag: 23.10.2014
(51) Int. Cl.: B23K 1/005, B23K 3/06

(54) **VORRICHTUNG ZUR VEREINZELTEN APPLIKATION VON LOTMATERIALDEPOTS**
APPARATUS FOR THE ISOLATED APPLICATION OF SOLDER MATERIAL DEPOSITS
DISPOSITIF D'APPLICATION ISOLÉE DE DÉPÔT DE MATIÈRE DE SOUDAGE

(30) Priorität: 19.12.2013 DE 102013114453
(43) Veröffentlichungstag der Anmeldung: 26.10.2016
(73) Patentinhaber: Pac Tech - Packaging Technologies GmbH, 14641 Nauen (DE)
(72) Erfinder: AZDASHT, Ghassem, 13591 Berlin (DE)
(74) Vertreter: advotec.
(86) Internationale Anmeldenummer: PCT/EP2014/072732
(87) Internationale Veröffentlichungsnummer: WO 2015/090686

(56) Entgegenhaltungen:
- CN-U- 202 114 398
- DE-A1- 19 838 532
- JP-A- H11 114 737
- US-A- 5 977 512
- US-A- 6 152 348
- US-A1- 2005 031 776
- US-A1- 2007 131 661
- US-A1- 2010 089 981

## Beschreibung

Die Erfindung betrifft eine Vorrichtung zur vereinzelten Applikation von Lotmaterialdepots, insbesondere Lotkugeln, mit einer Fördereinrichtung zur vereinzelten Förderung der Lotmaterialdepots von einem Lotmaterialreservoir zu einer Applikationseinrichtung, wobei die Fördereinrichtung als Durchgangslöcher ausgebildete Transportaufnahmen aufweist, die jeweils von einer Aufnahmeposition P1, in der ein Lotmaterialdepot aus dem Lotmaterialreservoir aufgenommen wird, in einer Übergabeposition P2 bewegbar sind, in der das Lotmaterialdepot mit Druckgas beaufschlagt wird und aus der das Lotmaterialdepot an eine Applikationsöffnung eines Applikationsmundstücks der Applikationseinrichtung in eine Applikationsposition P3 übergeben wird, wobei eine Detektoreinrichtung vorgesehen ist, die zur Auslösung einer Beaufschlagung des in der Applikationsposition P3 angeordneten Lotmaterialdepots mit einer von einer Lasereinrichtung emittierten Laserstrahlung dient.

Eine Vorrichtung gemäß dem Oberbegriff des Anspruchs 1 ist aus der DE 195 41 996 A1 bekannt. Diese Vorrichtung weist als Detektoreinrichtung einen Drucksensor auf, der den Gasdruck in der Applikationseinrichtung zwischen der in der Übergabeposition P2 angeordneten Transportaufnahme und einer Applikationsöffnung im Applikationsmundstück misst. Der Drucksensor ist hierzu im Gehäuse der Vorrichtung angeordnet und über eine im Gehäuse ausgebildete Druckbohrung mit einem in der Applikationseinrichtung ausgebildeten Applikationskanal verbunden und erfasst einen sich im Applikationskanal ausbildenden Überdruck, der dann entsteht, wenn die Applikationsöffnung durch ein in der Applikationsposition P3 angeordnetes Lotmaterialdepot verschlossen ist. Gesteuert über den Drucksensor erfolgt bei Erreichen eines definierten Schaltdrucks eine Auslösung der Laserbeaufschlagung dann, wenn sich ein Lotmaterialdepot in der Applikationsposition P3 befindet und die Applikationsöffnung blockiert.

Aus dem Vorstehenden wird deutlich, dass die Auslösung der Laserbeaufschlagung durch einen Drucksensor eine besondere konstruktive Ausgestaltung des Gehäuses der Vorrichtung erfordert, derart, dass zum einen der Drucksensor über eine Druckbohrung mit dem Applikationskanal verbunden in das Gehäuse integriert ist, und zum anderen das Gehäuse bzw. die im Gehäuse ausgebildete Applikationseinrichtung hinreichend abgedichtet sein muss, um eine einwandfreie Funktion des Drucksensors zu ermöglichen, die bei einer Blockierung der Applikationsöffnung durch ein Lotmaterialdepot voraussetzt, dass ein für die Schaltfunktion des Drucksensors ausreichender Überdruck erreicht wird. Der Einsatz eines Drucksensors erfordert somit einen hohen konstruktiven Aufwand mit entsprechend komplexer Ausgestaltung des Gehäuses.

Der vorliegenden Erfindung liegt die Aufgabe zugrunde, eine Auslösung der Beaufschlagung des in der Applikationsposition angeordneten Lotmaterialdepots mit Laserstrahlung unabhängig von einem Drucksensor zu ermöglichen.

Die erfindungsgemäße Vorrichtung weist hierzu die Merkmale des Anspruchs 1 auf.

Erfindungsgemäß weist die Detektoreinrichtung einen Reflexionssensor auf, der eine von dem in der Applikationsposition P3 angeordneten Lotmaterialdepot reflektierte Reflexionsstrahlung erfasst.

Im Unterschied zu der bekannten Vorrichtung, bei der ein Drucksensor zur Auslösung der Laserbeaufschlagung dient, kommt also bei der erfindungsgemäßen Vorrichtung ein optischer Sensor zum Einsatz, der die vom Lotmaterialdepot reflektierte Laserstrahlung erfasst, so dass erfindungsgemäß die Lasereinrichtung, die ohnehin als Energiequelle zur Beaufschlagung des Lotmaterialdepots mit Schmelzenergie benutzt wird, gleichzeitig das Medium, nämlich die Laserstrahlung, zur Verfügung stellt, um mit Hilfe des optischen Sensors eine Detektierung des Lotmaterials zu ermöglichen.

Im Betrieb der erfindungsgemäßen Vorrichtung wird hierzu eine Lasereinrichtung mit mindestens zwei Leistungsstufen betrieben, wobei in einer ersten Leistungsstufe ein sogenannter "Pilotstrahl" mit relativ geringer Energiedichte emittiert wird, der bei Auftreffen auf ein in der Applikationsöffnung angeordnetes Lotmaterialdepot die Ausbildung einer Reflektionsstrahlung ermöglicht, die von dem Reflexionssensor erfasst wird. Wenn dann aufgrund der Detektion der Reflektionsstrahlung durch den Reflexionssensor feststeht, dass sich ein Lotmaterialdepot in der Applikationsposition P3 befindet, erfolgt in einer zweiten Leistungsstufe der Lasereinrichtung eine Beaufschlagung des Lotmaterialdepots mit einer Laserstrahlung mit wesentlich erhöhter Energiedichte, die ein zumindest teilweises Aufschmelzen des Lotmaterialdepots und damit ein Austreiben des Lotmaterialdepots aus der Applikationseinrichtung mittels Druckgas ermöglicht.

In einer bevorzugten Ausführungsform ist die Detektoreinrichtung unabhängig von der Applikationseinrichtung ausgebildet und mittels einer Kopplungseinrichtung optisch mit der Applikationsöffnung des Applikationsmundstücks verbunden. Hierdurch ist es möglich, die Detektoreinrichtung unabhängig von der Vorrichtung anzuordnen, so dass die Detektoreinrichtung nicht notwendigerweise am Gehäuse der Vorrichtung ausgebildet sein muss. Damit kann das Gehäuse und insbesondere die Applikationseinrichtung vergleichsweise einfach ausgestaltet sein.

Als besonders vorteilhaft erweist es sich, wenn die Kopplungseinrichtung sowohl zur optischen Verbindung zwischen der Applikationsöffnung und der Detektoreinrichtung als auch zur optischen Verbindung zwischen der Applikationsöffnung und der Lasereinrichtung dient, so dass aufgrund der Mehrfachfunktion der Kopplungseinrichtung der Aufbau der Vorrichtung weiter vereinfacht werden kann.

Wenn die Kopplungseinrichtung am oberen Ende eines Applikationskanals gegenüberliegend der Applikationsöffnung auf einer Oberseite eines Gehäuseoberteils der Vorrichtung angeordnet ist und sowohl eine transparente Kopplungsfläche zur Herstellung einer optischen Verbindung zwischen der Applikationsöffnung und der Lasereinrichtung als auch eine Strahlumlenkeinrichtung zur Umlenkung der vom Lotmaterialdepot reflektierten Reflexionsstrahlung zur Detektoreinrichtung aufweist, ist zum einen ein kompakter Aufbau der Kopplungseinrichtung gegeben, zum anderen ist die Kopplungseinrichtung exponiert auf der Oberseite des Gehäuses angeordnet, so dass die Detektoreinrichtung beliebig in der Peripherie der Vorrichtung angeordnet werden kann.

Ein besonders einfacher Aufbau der Kopplungseinrichtung ergibt sich, wenn die Kopplungsfläche von der Strahlumlenkeinrichtung ausgebildet wird. Insbesondere durch diese Doppelfunktion der Strahlumlenkeinrichtung wird eine Ausbildung einer miniaturisierten Kopplungseinrichtung ermöglicht, was im besonderen Maße einer wünschenswerten Massereduktion der Vorrichtung entgegenkommt.

Eine besonders kompakte und einfache Ausgestaltung der die vorstehend erläuterte Doppelfunktion ermöglichenden Strahlumlenkeinrichtung kann dadurch erfolgen, dass die Strahlumlenkeinrichtung als halbdurchlässiger Spiegel ausgebildet ist, der unter einem Winkel von 45° zur optischen Achse zwischen der Lasereinrichtung und der Applikationsöffnung angeordnet ist.

Besonders vorteilhaft ist es auch, wenn die Detektoreinrichtung zusätzlich zu dem Reflektionssensor, der die von dem in der Applikationsöffnung des Applikationsmundstücks angeordneten Lasermaterialdepot reflektierte Reflexionsstrahlung erfasst, einen optischen Temperatursensor aufweist, der die von dem Lotmaterialdepot emittierte Infrarot-Strahlung erfasst. Durch die Integration des optischen Temperatursensors in die Detektoreinrichtung kann diese nicht nur zur Auslösung der Laserbeaufschlagung des Lotmaterialdepots durch die Lasereinrichtung dienen, sondern auch zur Bestimmung der Temperatur des Lotmaterialdepots. Die Temperatur des Lotmaterialdepots ermöglicht insbesondere gestützt auf eine empirisch ermittelte Korrelation zwischen der Temperatur des Lotmaterialdepots und dessen Schmelzzustand die Optimierung der Einstellung der Parameter der Lasereinrichtung.

Insbesondere dann, wenn der Temperatursensor mit einer Steuereinrichtung der Lasereinrichtung verbunden ist, derart, dass die Steuereinrichtung in Abhängigkeit von einem Temperatursensorausgangssignal den Betrieb der Lasereinrichtung steuert, kann eine optimierte Einstellung der Lasereinrichtung in situ, also während des Betriebs der Vorrichtung erfolgen.

Es zeigen:
- **Fig. 1**: eine Vorrichtung zur vereinzelten Applikation von Lotmaterialdepots in isometrischer Darstellung;
- **Fig. 2**: die in **Fig. 1** dargestellte Vorrichtung in einer Schnittdarstellung;
- **Fig. 3**: eine Fördereinrichtung der in **Fig. 2** dargestellten Vorrichtung in Draufsicht;
- **Fig. 4**: eine Draufsicht auf ein Vorrichtungsgehäuse der in den **Fig. 1** und **2** dargestellten Vorrichtung.

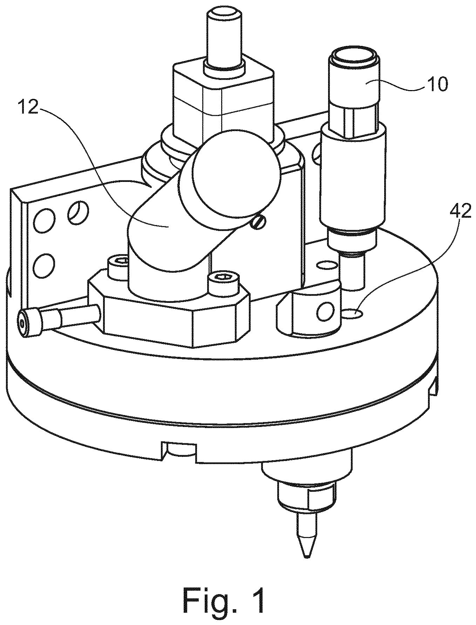

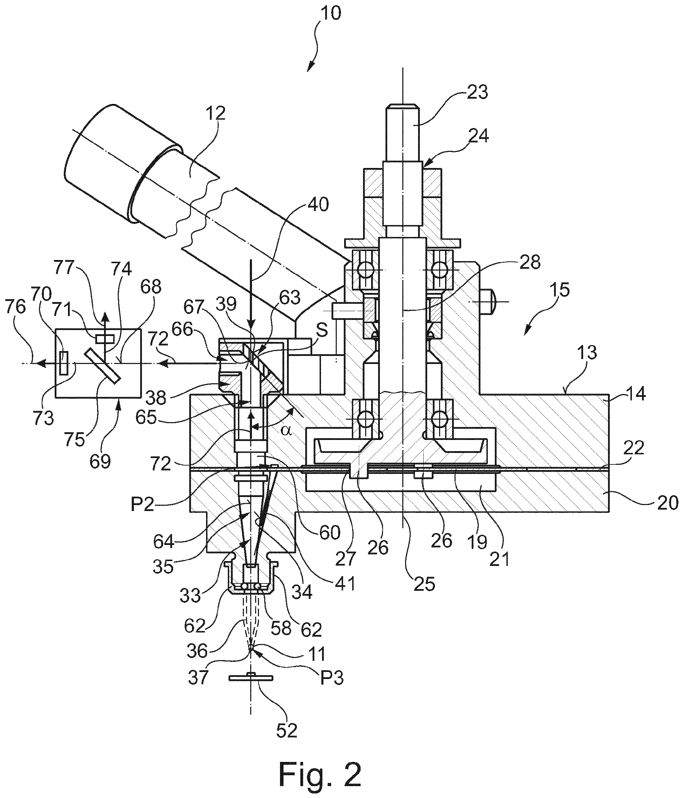

In den **Fig. 1** **und** **2** ist eine Vorrichtung 10 zur vereinzelten Applikation von Lotmaterialdepots 11 dargestellt, wobei die Lotmaterialdepots 11 im vorliegenden Fall als Lotmaterialkugeln ausgebildet sind, die zur Bevorratung in einem Lotmaterialreservoir 12 aufgenommen sind, das auf einer Oberseite 13 eines Gehäuseoberteils 14 eines Vorrichtungsgehäuses 15 angeordnet ist. Im Gehäuseoberteil 14 ist unterhalb einer Anschlussöffnung 16 (**Fig**. **4**) ein Lotmaterialkanal 17 ausgebildet, der es ermöglicht, dass, wie in **Fig. 1** dargestellt, Lotmaterialdepots 11 aus dem Lotmaterialreservoir 12 in als Durchgangslöcher ausgebildete Transportaufnahmen 18 (**Fig**. **3**) einer als Kreisförderscheibe ausgebildeten Fördereinrichtung 19 gelangen, die zwischen dem Gehäuseoberteil 14 und einem Gehäuseunterteil 20 in einen Kreisförderraum 21 aufgenommen ist. Zur Ausbildung des Kreisförderraums 21 ist zwischen dem Gehäuseoberteil 14 und dem Gehäuseunterteil 20 ein Gehäusering 22 konzentrisch zur Fördereinrichtung 19 angeordnet.

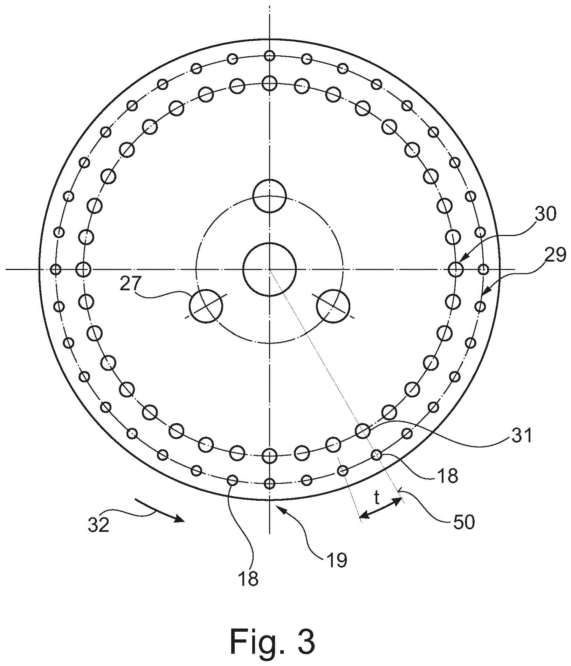

In dem Gehäuseoberteil 14 befindet sich eine an ihrem Antriebsende 23 mit einem hier nicht näher dargestellten Motorantrieb koppelbare Förderwelle 24, die über an ihrem Abtriebsende 25 angeordnete Antriebszapfen 26, die in Eingriffsöffnungen 27 der in **Fig. 3** dargestellten Fördereinrichtung 19 angreifen, einen Drehantrieb der Fördereinrichtung 19 um eine Rotationsachse 28 ermöglicht.

Wie **Fig. 3** zeigt, weist die Fördereinrichtung 19 zusätzlich zu den Transportaufnahmen 18, die auf einem Förderkreis 29 der Fördereinrichtung 19 äquidistant angeordnet sind, einen Steuerkreis 30 auf, der konzentrisch und im vorliegenden Fall innerhalb des Förderkreises 29 angeordnet ist und jeweils auf einer gemeinsamen radialen Achse 50 mit den Transportaufnahmen 18 Steuerbohrungen 31 aufweist. Diese Steuerbohrungen 31 wirken mit einer im Vorrichtungsgehäuse 15 angeordneten, hier nicht näher dargestellten Lichtschrankeneinrichtung zusammen und ermöglichen die Steuerung einer getakteten Kreisförderbewegung der Fördereinrichtung 19 um die Rotationsachse 28, derart, dass in Förderrichtung 32 der Fördereinrichtung 19 die Transportaufnahmen 18 aus einer Aufnahmeposition P1 unterhalb des mit dem Lotmaterialreservoir 12 verbundenen Lotmaterialkanals 17 jeweils um eine Teilung t des Förderkreises 29 in die Förderrichtung 32 vorwärts bewegt werden und in eine Übergabeposition P2 gelangen, in der sich die Transportaufnahmen 18 in koaxialer bzw. fluchtender Anordnung mit einem im Gehäuseunterteil 20 ausgebildeten Zuführkanal 41 befinden, der sich von der Übergabeposition P2 zur Applikationseinrichtung 33 erstreckt und mit einem Ausgabeende 34 in einen Applikationskanal 35 der Applikationseinrichtung 33 einmündet.

Wie **Fig. 2** zeigt, weist die Applikationseinrichtung 33 an ihrem unteren Ende ein auswechselbar am Gehäuseunterteil 20 angeordnetes Applikationsmundstück 36 mit einer Applikationsöffnung 37 auf, die im vorliegenden Fall in ihrem Durchmesser kleiner bemessen ist als der Durchmesser der Lotmaterialdepots 11, so dass ein aus der Übergabeposition P2 zum Applikationsmundstück 36 übergebenes Lotmaterialdepot 11 in einer Applikationsposition P3 zur Anlage gegen einen Öffnungsrand der Applikationsöffnung 37 gelangt. Das Applikationsmundstück 36 ist im vorliegenden Fall mittels einer Überwurfmutter 62 mit dem Gehäuseunterteil 20 verschraubt, wobei der Anschluss des Applikationsmundstücks 36 an das Gehäuseunterteil 20 zur Abdichtung gegenüber dem Gehäuseunterteil 20 eine Dichtung 58 aufweist.

Am oberen Ende des Applikationskanals 35 ist an der Oberseite 13 des Vorrichtungsgehäuses 15 eine Kopplungseinrichtung 38 angeordnet, die mit einer transparenten Kopplungsfläche 39 versehen ist. Über die Kopplungsfläche 39 kann eine Beaufschlagung des in der Applikationsposition P3 angeordneten Lotmaterialdepots 11 mit Laserstrahlung 40 erfolgen, die von einer hier nicht näher dargestellten Lasereinrichtung emittiert wird.

Die Kopplungsfläche 39 ist im vorliegenden Fall durch eine Oberseite eines halbdurchlässigen Spiegels 63 ausgebildet, der unter einem Winkel α = 45° auf einer zwischen der Applikationsöffnung 37 und der hier nicht näher dargestellten, die Laserstrahlung 40 emittierenden Lasereinrichtung verlaufenden optischen Achse 64 angeordnet ist.

In der in **Fig. 2** dargestellten Konfiguration der Vorrichtung befindet sich ein Lotmaterialdepot 11 an der Applikationsöffnung 37 in der Applikationsposition P3. Dabei liegt das Lotmaterial 11 an einem inneren Öffnungsrand der Applikationsöffnung 37 auf.

Wie **Fig. 2** zeigt, weist die am oberen Ende des Applikationskanals 35 gegenüberliegend der Applikationsöffnung 37 auf der Oberseite 13 des Gehäuseoberteils 14 angeordnete Kopplungseinrichtung 38 einen koaxial zur optischen Achse 64 angeordneten Strahlungskanal 65 und einen senkrecht zur optischen Achse 64 angeordneten Reflektionskanal 66 auf. Der halbdurchlässige Spiegel 63 ist mit einer, hier durch die Unterseite des Spiegels 63 gebildeten Reflektionsfläche 67 in einem Schnittpunkt S des Reflektionskanals 66 mit dem Strahlungskanal 65 angeordnet. Auf einer unter einem Reflektionswinkel β = 90° zur optischen Achse angeordneten Reflektionsachse 68 ist eine Detektoreinrichtung 69 vorgesehen, die einen Reflektionssensor 70 und einen Temperatursensor 71 aufweist und im vorliegenden Fall unabhängig von dem Vorrichtungsgehäuse 15 ausgebildet ist.

Wenn das in der Applikationsposition P3 angeordnete Lotmaterialdepot 11 mit von der Lasereinrichtung emittierter Laserstrahlung 40 beaufschlagt wird, erfolgt an der Oberfläche des Lotmaterialdepots 11 eine zumindest anteilige Reflektion der Laserstrahlung 40, so dass eine von dem Lotmaterial 11 reflektierte Reflektionsstrahlung 72 auf die Reflektionsfläche 67 des halbdurchlässigen Spiegels 63 reflektiert und von dieser längs der Reflektionsachse 68 zur Detektoreinrichtung 69 gelangt, in der mittels eines im vorliegenden Fall ebenfalls als halbdurchlässiger Spiegel 73 ausgebildeten Strahlteilers eine Aufteilung des Reflektionsstrahls 72 in einen auf den Reflektionssensor 70 auftreffenden Reflektionssensorstrahl 73 und einen auf den Temperatursensor 71 auftreffenden Temperatursensorstrahl 74 erfolgt.

Im Betrieb der Vorrichtung wird die Lasereinrichtung in zwei Leistungsstufen betrieben, derart, dass die Laserstrahlung 40 in einer ersten Leistungsstufe als Pilotstrahl mit relativ geringer Energiedichte emittiert wird, der als Reflektionsstrahlung 72 von dem in der Applikationsposition P3 angeordneten Lotmaterialdepot 11 reflektiert wird und als Reflektionssensorstrahl 73 auf den Reflektionssensor 70 auftrifft.

Wenn aufgrund der Detektion der Reflektionsstrahlung 72 durch den Reflektionssensor 70 feststeht, dass sich ein Lotmaterialdepot 11 in der Applikationsposition P3 befindet, erfolgt ausgelöst durch ein Reflexionssensorausgangssignal 76 eine Umschaltung der Lasereinrichtung in die zweite Leistungsstufe in der die Laserstrahlung 40 als Leistungsstrahlung mit erhöhter Energiedichte emittiert wird. Die Leistungsstrahlung bewirkt ein zumindest teilweises Aufschmelzen des Lotmaterialdepots 11, wobei der in der Reflektionsstrahlung 72 enthaltene Infrarot-Strahlungsanteil von dem Temperatursensor 71 erfasst wird und ein entsprechendes Temperatursensorausgangssignal 77 erzeugt wird. Das Temperatursensorausgangssignal 77 ermöglicht die Bestimmung der Temperatur des Lotmaterialdepots 11, so dass das Temperatursensorausgangssignal 77 beispielsweise dazu verwendet werden kann, je nach Bedarf die Leistung und/oder eine Pulsdauer der Laserstrahlung 40 so einzustellen, dass die gewünschte Temperatur und der gewünschte Schmelzzustand des Lotmaterialdepots 11 erreicht werden.

Das infolge der Laserbeaufschlagung zumindest partiell aufgeschmolzene Lotmaterialdepot 11 wird mittels einer Druckgasbeaufschlagung über den in den Applikationskanal 35 einmündenden Zuführkanal 41 durch die Applikationsöffnung 37 herausgeschleudert und gegen eine Kontaktfläche 51 eines Substrats 52 appliziert.

Dabei kann die Druckgasbeaufschlagung beispielsweise in Abhängigkeit davon erfolgen, dass nach Detektierung eines Lotmaterialdepots in der Applikationsposition P3 durch den Reflektionssensor 70 und nach Ablauf einer vorgegebenen Zeitspanne, in der eine Beaufschlagung des Lotmaterialdepots 11 mit einer Leistungsstrahlung erfolgt, die Druckgasbeaufschlagung ausgelöst wird.

Natürlich ist es auch möglich, die Vorrichtung so zu betreiben, dass die Druckgasbeaufschlagung in Abhängigkeit davon erfolgt, dass über den Temperatursensor 71 ein definierter Schmelzzustand des Lotmaterialdepots 11 festgestellt wird.

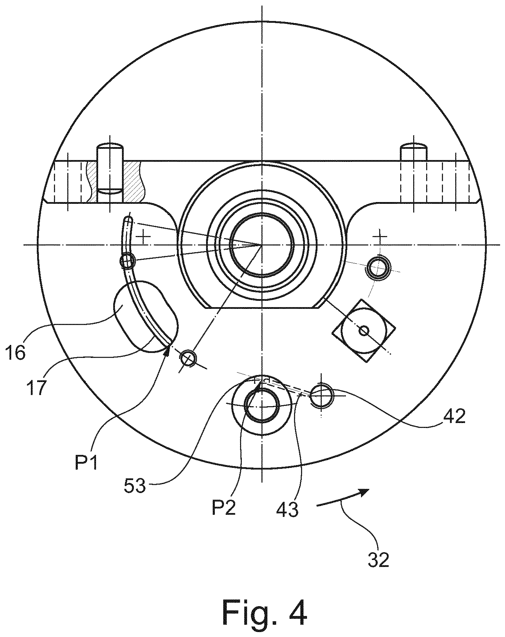

Zur Druckgasbeaufschlagung weist das Gehäuseoberteil 14 einen in den **Fig. 1** **und** **4** dargestellten Druckgasanschluss 42 auf, der über einen Druckgaskanal 43 mit einem im Gehäuseoberteil 14 oberhalb der Übergabeposition P2 gegenüberliegend dem oberen Ende des im Gehäuseunterteils 20 ausgebildeten Zuführkanals 41 ausgebildeten Lotmaterialdepot-Aufnahmeraums 53 verbunden ist. Mittels der Druckgasbeaufschlagung des im Lotmaterialdepot-Aufnahmeraum 53 angeordneten Lotmaterialdepots 11 erfolgt auch eine Überführung des Lotmaterialdepots 11 in die Applikationsposition P3 an der Applikationsöffnung 37 des Applikationsmundstücks.

## Patentansprüche

1. Vorrichtung (10) zur vereinzelten Applikation von Lotmaterialdepots (11), insbesondere Lotkugeln, die Vorrichtung umfassend ein Lotmaterialreservoir (12), eine Applikationseinrichtung (33), eine Lasereinrichtung und eine Fördereinrichtung (19) zur vereinzelten Förderung der Lotmaterialdepots (11) von dem Lotmaterialreservoir (12) zu der Applikationseinrichtung (33), wobei die Fördereinrichtung (19) als Kreisförderscheibe ausgebildet ist und als Durchgangslöcher ausgebildete Transportaufnahmen (18) aufweist, die jeweils von einer Aufnahmeposition (P1), in der (P1) ein Lotmaterialdepot (11) aus dem Lotmaterialreservoir (12) aufnehmbar ist, in eine Übergabeposition (P2) bewegbar sind, in der (P2) das Lotmaterialdepot (11) mit Druckgas beaufschlagbar ist und aus der (P2) das Lotmaterialdepot (11) an eine Applikationsöffnung (37) eines Applikationsmundstücks (36) der Applikationseinrichtung (33) in eine Applikationsposition (P3) übergebbar ist, wobei eine Detektoreinrichtung (69) vorgesehen ist, die zur Auslösung einer Beaufschlagung des in der Applikationsposition (P3) angeordneten Lotmaterialdepots (11) mit einer von der Lasereinrichtung emittierten Laserstrahlung (40) dient, wobei die Detektoreinrichtung (69) einen Reflexionssensor (70) aufweist, durch den eine von dem in der Applikationsposition (P3) angeordneten Lotmaterialdepot (11) reflektierte Reflexionsstrahlung (72) erfassbar ist,
**dadurch gekennzeichnet,**
**dass** die Detektoreinrichtung (69) unabhängig von der Applikationseinrichtung (33) ausgebildet ist und mittels einer Kopplungseinrichtung (38) optisch mit der Applikationsöffnung (37) des Applikationsmundstücks (36) verbunden ist, wobei die Kopplungseinrichtung (38) sowohl zur optischen Verbindung zwischen der Applikationsöffnung (37) und der Detektoreinrichtung (69) als auch zur optischen Verbindung zwischen der Applikationsöffnung (37) und der Lasereinrichtung dient, und wobei die Kopplungseinrichtung (38) am oberen Ende eines Applikationskanals (35) gegenüberliegend der Applikationsöffnung (37) auf einer Oberseite (13) eines Gehäuseoberteils (14) der Vorrichtung angeordnet ist und sowohl eine transparente Kopplungsfläche (39) zur Herstellung einer optischen Verbindung zwischen der Applikationsöffnung (37) und der Lasereinrichtung als auch eine Strahlumlenkeinrichtung zur Umlenkung der von dem Lotmaterialdepot (11) reflektierten Reflexionsstrahlung (72) zur Detektoreinrichtung (69) aufweist.

2. Vorrichtung nach Anspruch 1,
**dadurch gekennzeichnet,**
**dass** die Kopplungsfläche (39) von der Strahlumlenkeinrichtung ausgebildet ist.

3. Vorrichtung nach Anspruch 2,
**dadurch gekennzeichnet,**
**dass** die Strahlumlenkeinrichtung als halbdurchlässiger Spiegel (63) ausgebildet ist, der unter einem Winkel von 45° zur optischen Achse (64) zwischen der Lasereinrichtung und der Applikationsöffnung (37) angeordnet ist.

4. Vorrichtung nach einem der vorangehenden Ansprüche,
**dadurch gekennzeichnet,**
**dass** die Detektoreinrichtung (69) zusätzlich zu dem Reflexionssensor (70), durch den die von dem in der Applikationsöffnung (37) des Applikationsmundstücks (36) angeordneten Lotmaterialdepot (11) reflektierte Reflexionsstrahlung (72) erfassbar ist, einen optischen Temperatursensor (71) aufweist, durch den eine von dem Lotmaterialdepot (11) emittierte Infrarot-Strahlung erfassbar ist.

5. Vorrichtung nach Anspruch 4,
**dadurch gekennzeichnet,**
**dass** der Temperatursensor (71) mit einer Steuereinrichtung der Lasereinrichtung verbunden ist, derart, dass die Steuereinrichtung in Abhängigkeit von einem Temperatursensorausgangssignal (77) den Betrieb der Lasereinrichtung steuert.

## Claims

1. A device (10) for the separate application of solder material deposits (11), in particular solder balls, the device comprising a solder material reservoir (12), an application device (33), a laser device and a conveying device (19) for separately conveying the solder material deposits (11) from the solder material reservoir (12) toward the application device (33), the conveying device (19) being formed as a circular conveying disk and having transport holders (18) that are formed as passage holes and that are each moved from a receiving position (P1), in which (P1) a solder material deposit (11) is received from the solder material reservoir (12), into a transfer position (P2), in which (P2) the solder material deposit (11) is exposed to a pressure gas and from which (P2) the solder material deposit (11) is transferred to an application opening (37) of an application nozzle (36) of the application device (33) into an application position (P3), wherein a detector device (69) is provided that serves to trigger a treatment of the solder material deposit (11) arranged in the application position (P3) with laser radiation (40) emitted by the laser device, wherein the detector device (69) has a reflection sensor (70) by means of which reflection radiation (72) that is reflected by the solder material deposit (11) arranged in the application position (P3) is detected,
**characterised in that**
the detector device (69) is realised independently of the application device (33) and is optically connected to the application opening (37) of the application nozzle (36) by means of a coupling device (38), wherein the coupling device (38) serves both to optically connect the application opening (37) and the detector device (69) and to optically connect the application opening (37) and the laser device, and wherein the coupling device (38) is arranged at the upper end of an application duct (35) opposite of the application opening (37) on a top side (13) of an upper housing part (14) of the device and has both a transparent coupling surface (39) for establishing an optical connection between the application opening (37) and the laser device and a beam deflection device for deflecting the reflection radiation (72) reflected by the solder material deposit (11) toward the detector device (69).

2. The device according to claim 1,
**characterised in that**
the coupling surface (39) is formed by the beam deflection device.

3. The device according to claim 2,
**characterised in that**
the beam deflection device is realised as a semi-transparent mirror (63) that is arranged at an angle of 45° to the optical axis (64) between the laser device and the application opening (37).

4. The device according to any of the preceding claims,
**characterised in that**
in addition to the reflection sensor (70) by means of which the reflection radiation (72) reflected by the solder material deposit (11) arranged in the application opening (37) of the application nozzle (36) is detected, the detector device (69) has an optical temperature sensor (71) by means of which infrared radiation emitted by the solder material deposit (11) is be detected.

5. The device according to claim 4,
**characterised in that**
the temperature sensor (71) is connected to a control device of the laser device in such a manner that the control device controls the operation of the laser device as a function of an output signal (77) of the temperature sensor.

## Revendications

1. Dispositif (10) pour une application séparée de dépôts de matériau de brasage (11), notamment de billes de brasage, le dispositif comprenant un réservoir de matériau de brasage (12), un dispositif d'application (33), un dispositif laser et un convoyeur (19) pour transporter séparément les dépôts de matériau de brasage (11) du réservoir de matériau de brasage (12) vers le dispositif d'application (33), le convoyeur (19) étant réalisé comme disque de convoyage circulaire et ayant des fixations de transport (18) réalisées comme trous de passage, chacune des fixations de transport (18) étant déplacée d'une position de réception (P1), dans laquelle (P1) un dépôt de matériau de brasage (11) est reçu du réservoir de matériau de brasage (12), vers une position de transfert (P2), dans laquelle (P2) le dépôt de matériau de brasage (11) est pressurisé avec du gaz comprimé et à partir de laquelle (P2) le dépôt de matériau de brasage (11) est transféré à une ouverture d'application (37) d'un embout d'application (36) du dispositif d'application (33) dans une position d'application (P3), un dispositif de détection (69) étant prévu, qui sert à déclencher l'alimentation du dépôt de matériau de brasage (11) disposé dans la position d'application (P3) en un rayonnement laser (40) émis par le dispositif laser, le dispositif de détection (69) ayant un capteur de réflexion (70) au moyen duquel un rayonnement de réflexion (72) réfléchi par le dépôt de matériau de brasage (11) disposé dans la position d'application (P3) est détecté,
**caractérisé en ce que**
le dispositif de détection (69) est réalisé indépendamment du dispositif d'application (33) et est relié optiquement à l'ouverture d'application (37) de l'embout d'application (36) au moyen d'un dispositif de couplage (38), le dispositif de couplage (38) servant à établir une connexion optique entre l'ouverture d'application (37) et le dispositif de détection (69) aussi bien qu'à établir une connexion optique entre l'ouverture d'application (37) et le dispositif laser, et le dispositif de couplage (38) étant disposé sur l'extrémité supérieure d'un conduit d'application (35) opposé à l'ouverture d'application (37) sur un côté supérieur (13) d'une partie supérieure (14) du boîtier du dispositif et ayant une surface de couplage (39) transparente pour établir une connexion optique entre l'ouverture d'application (37) et le dispositif laser aussi bien qu'un dispositif de déviation de faisceau pour dévier le rayonnement de réflexion (72) réfléchi par le dépôt de matériau de brasage (11) vers le dispositif de détection (69).

2. Dispositif selon la revendication 1,
**caractérisé en ce que**
la surface de couplage (39) est formée par le dispositif de déviation de faisceau.

3. Dispositif selon la revendication 2,
**caractérisé en ce que**
le dispositif de déviation de faisceau est réalisé comme miroir (63) semi-transparent qui est disposé à un angle de 45° par rapport à l'axe optique (64) entre le dispositif laser et l'ouverture d'application (37).

4. Dispositif selon l'une quelconque des revendications précédentes,
**caractérisé en ce qu'**
en plus du capteur de réflexion (70), au moyen duquel le rayonnement de réflexion (72) réfléchi par le dépôt de matériau de brasage (11) disposé dans l'ouverture d'application (37) de l'embout d'application (36) est détecté, le dispositif de détection (69) a un capteur de température (71) optique au moyen duquel un rayonnement infrarouge émis par le dépôt de matériau de brasage (11) est détecté.

5. Dispositif selon la revendication 4,
**caractérisé en ce que**
le capteur de température (71) est relié à un dispositif de contrôle du dispositif laser de manière que le dispositif de contrôle commande l'opération du dispositif laser en fonction d'un signal de sortie (77) du capteur de température.
